**Europäisches Patentamt**

**European Patent Office**

**Office européen des brevets**

(11) Numéro de publication: **0 012 480**
**A1**

(12) # DEMANDE DE BREVET EUROPEEN

(21) Numéro de dépôt: **79200732.0**

(22) Date de dépôt: **06.12.79**

(51) Int. Cl.³: **B 29 C 17/02**

(30) Priorité: 12.12.78 NL 7812063
12.12.78 NL 7812066

(43) Date de publication de la demande: **25.06.80**
**Bulletin 80/13**

(84) Etats contractants désignés: **BE DE FR GB IT NL**

(71) Demandeur: **POLVA-NEDERLAND B.V., Flevolaan, 5,**
**Enkhuizen (NL)**

(72) Inventeur: **Acda, Petrus Marinus, Vrijdom, 13, Enkhuizen**
**(NL)**
Inventeur: **Karreman, Jacob, Drie Banen, 63, NL-1601 NN**
**Enkhuizen (NL)**

(74) Mandataire: **Eischen, Roland, Solvay & Cie, Dept. de la**
**Propriété Industrielle Rue de Ransbeek 310,**
**B-1120 Bruxelles (BE)**

(54) **Procédé et dispositif pour le formage de pièces de raccord en matière thermoplastique.**

(57) Procédé et dispositif le formage, sur l'extrémité d'un
tuyau (1) en matière thermoplastique, d'une pièce de raccord présentant une rainure (5) annulaire en contredépouille destinée à recevoir un joint annulaire d'étanchéité
(30) suivant lesquels la pièce de raccord est d'abord préformée au moyen d'un noyau de formage (9) présentant
une nervure annulaire (10) pour former la rainure annulaire (5), le noyau (9) étant ensuite extrait de la pièce de
raccord partiellement refroidie moyennant une déformation
élastique de la partie (4) comportant la rainure (5) par la
nervure (10) du noyau de formage, cette partie (4) étant
maintenue à température de déformation élastique, et
suivant lesquels on soumet cette partie (4) à une opération
de postformage avant son refroidissement complet au
moyen d'un anneau de postformage (25).

- 1 -

## Procédé et dispositif pour le formage de pièces de raccord en matière thermoplastique

Cas POL.78/2-5
(PHK.128-129)

POLVA-NEDERLAND B.V.

La présente invention concerne un procédé perfectionné pour le formage de pièces de raccord en matière thermoplastique pourvues d'au moins une rainure annulaire en contredépouille dans lequel la matière thermoplastique est mise en forme, au moyen d'un noyau de formage pourvu d'une nervure annulaire dont le contour externe correspond à la forme à conférer à la pièce de raccord, dans des conditions de température et de pression telles que le noyau de formage soit étroitement entouré par la matière thermoplastique et qu'une pièce de raccord pourvue d'une rainure annulaire en contredépouille soit préformée, dans lequel la pièce de raccord ainsi préformée est en partie refroidie de sorte que la partie terminale resserrée de la pièce de raccord s'étendant depuis l'extrémité libre de la pièce de raccord jusqu'à l'endroit de plus grande profondeur de la contredépouille soit maintenue à une température telle que cette partie demeure élastiquement déformable, dans lequel le noyau de formage y compris la nervure dont il est pourvu est ensuite rétiré de la pièce de raccord par la partie resserrée moyennant une déformation élastique de celle-ci, dans lequel la partie terminale élastiquement déformée est refroidie ensuite à une température telle que la matière thermoplastique ne soit plus déformable et dans lequel la pièce de raccord ainsi formée est enfin séparée complètement du noyau de formage. La présente invention concerne également un dispositif convenant pour la réalisation de ce procédé.

Un procédé de ce type est décrit dans la demande de brevet allemand 2 633 050 au nom de ANTON ANGER MASCHINENBAU GmbH. Selon ce procédé connu, dans lequel le noyau de formage est entouré de la matière thermoplastique par injection, la partie terminale élastiquement déformée de la pièce de raccord moulée reprend finalement sa forme préformée sous l'effet de son élasticité après retrait du manchon de formage.

Ce procédé connu présente toutefois l'inconvénient que la précision de forme et de dimensions de la partie terminale déformée de la pièce de raccord ainsi produite dépend fortement de la température maintenue dans la matière thermoplastique ainsi que de la forme de la contredépouille et est de ce fait difficile à maîtriser. En pratique, ce procédé connu ne peut en fait convenir tel quel pour la réalisation de pièces de raccord dans lesquels on exige une grande précision de forme et de dimensions.

La présente invention a pour but de supprimer ces inconvénients et de permettre dès lors de façon reproductible la réalisation de pièces de raccord présentant une contredépouille de grande profondeur et de forme divergente avec une très grande précision de forme et de dimension.

Ce résultat est essentiellement atteint dans le procédé selon l'invention grâce au fait que la partie terminale resserrée de la pièce de raccord préformée selon le procédé sus-décrit est postformée à la forme finale désirée après la déformation élastique et avant le refroidissement complet.

De ce fait, la partie terminale de la pièce de raccord préformée est, après sa déformation élastique due au retrait du noyau de formage, postformée de façon positive et ramenée ainsi exactement dans la forme originelle désirée qui correspond à la forme préformée avant déformation élastique. Grâce à cette étape de postformage, le procédé selon l'invention est moins dépendant de l'élasticité de la matière thermoplastique à travailler et de la forme de la contredépouille. Le procédé selon l'invention permet dès lors la réalisation de pièces de raccord pourvues d'une contredépouille importante et de formes variées avec une très grande précision en ce qui concerne la forme et les dimensions.

De préférence, le refroidissement de la partie terminale de la pièce de raccord à une température telle que la matière thermoplastique ne soit plus déformée est réalisé, dans le procédé selon l'invention, durant l'opération de postformage.

Les pièces de raccord obtenues par le procédé selon l'invention présentent une partie terminale resserrée et sont pourvue d'une contredépouille dont la précision de forme et de dimensions est au moins égale à celle de la partie restante et leur surface extérieure est dépourvue de soudure. Cette précision de forme et de dimensions est telle que à l'état monté de la pièce de raccord en coopération avec un tuyau couplé il n'y a aucun risque de fuite par déplacement axial du fait de la pression régnant dans le tuyau, d'un anneau d'étanchéité introduit par la suite dans la contredépouille.

La présente invention concerne également un dispositif particulier pour la réalisation du procédé selon l'invention. Ce dispositif qui comporte principalement un noyau de formage pourvu d'une rainure annulaire déplaçable axialement entre une position de repos et une position de travail comporte en outre selon l'invention un élément de postformage qui est déplaçable par rapport au noyau de formage entre une position de repos et une position de travail et dont la forme est similaire à une partie de la forme du noyau de formage.

Selon une variante de réalisation du dispositif selon l'invention qui sera décrite ultérieurement de façon plus détaillée, on peut utiliser un noyau de formage pourvus de canaux qui sont raccordés à une source de vide et qui débouchent sur le contour externe du noyau de formage ou un noyau de formage qui coopère avec une douille de formage et avec un anneau de fermeture pour former un espace fermé de préformage.

L'élément de postformage qui est de préférence de forme générale annulaire peut être réalisé en une ou plusieurs pièces séparables.

Selon un mode de réalisation préférentiel l'élément de postformage est équipé d'une chambre interne de réfrigération. De ce fait, on peut obtenir une réfrigération rapide de la partie terminale lors de son postformage et le temps du cycle de travail du dispositif peut de ce fait être raccourci.

Selon une forme particulière de réalisation, le dispositif selon l'invention comporte un noyau de formage de forme générale cylindrique pourvu d'une nervure périphérique, une douille de formage et un anneau de fermeture qui sont déplaçables relativement entre eux et par rapport à un collier de serrage du tuyau à travailler entre une position de repos et une position de travail et qui en position de travail délimitent un espace de préformage qui correspond à la forme du manchon à former, des moyens pour le déplacement relatif du noyau de formage, de la douille de formage, de l'anneau de fermeture et du collier de serrage et un élément de postformage qui est déplaçable par rapport au noyau de formage et à la douille de formage entre une position de repos et une position de travail et qui en position de travail délimite avec le noyau de formage et la douille de formage un espace de postformage qui correspond avec la partie terminale du manchon à former.

Selon un mode préférentiel du dispositif selon l'invention des chambres de circulation pour la circulation de moyens de chauffage ou de réfrigération sont prévus dans le noyau de formage et dans l'élément de postformage et éventuellement dans la douille de formage et dans l'anneau de fermeture. De la sorte, en faisant circuler en phase correcte un fluide de chauffage et/ou de réfrigération dans ces chambres, le procédé selon l'invention peut être conduit de façon optimale et parfaitement maîtrisée et reproductible pour des produits différents et en influençant positivement la précision de forme et de dimensions de produits obtenus.

- 5 -

Selon une autre forme préférentielle de réalisation, le dispositif selon l'invention comporte un élément de postformage réalisé sous forme d'un anneau de pression qui est déplaçable axialement par rapport au noyau et à la douille de formage. L'espace de postformage est alors formé par le déplacement axial de l'anneau de pression contre la douille de formage qui forme butée pour l'anneau de pression et permet un positionnement plus sûr et plus précis de cet anneau en position de travail.

Dans un autre mode de réalisation, l'anneau de fermeture est également exécuté sous forme d'un anneau de pression dont le diamètre interne minimal est plus grand que le diamètre maximum externe de la nervure prévue sur le noyau de formage.

Ce dernier mode de réalisation convient particulièrement pour le formage de manchons dont la rainure en contredépouille est relativement grande et/ou dont l'épaisseur de paroi est relativement élevée et dans lesquels le diamètre externe sur l'extrémité libre des manchons est plus grand que le diamètre interne maximum au niveau de la rainure formée. Il est fait alors préférablement usage de l'anneau de fermeture comme anneau de pression pour accomplir également la fonction d'élément de postformage de sorte qu'il n'est plus nécessaire de prévoir un anneau de postformage particulier et que le nombre d'éléments du dispositif est réduit.

Un anneau de pression particulier comme élément de postformage reste nécessaire pour le formage de manchons avec une rainure relativement profonde ou avec une épaisseur de paroi relativement grande dans lesquels le diamètre externe de la partie terminale libre est plus petit que le diamètre interne maximum à hauteur de la nervure.

Selon une autre forme de réalisation préférentielle du dispositif selon l'invention, l'anneau de pression est également déplaçable radialement par rapport au noyau de formage et à la douille de formage.

Cette forme de réalisation fait, il est vrai, appel à un anneau de pression particulier déplaçable radialement et ce indépendamment de l'anneau de fermeture. Toutefois, du fait de cet anneau de pression indépendant, il est possible de postformer des manchons de dimensions, de formes et d'épaisseur de paroi variées en adaptant évidemment l'anneau de pression en fonction des dimensions et de l'épaisseur de paroi des manchons à postformer.

Du fait que, selon un autre mode de réalisation préférentielle du dispositif selon l'invention, l'anneau de pression peut être réalisé en une seule pièce il est possible malgré le recours à un élément additionnel de postformage de limiter le nombre d'éléments additionnels pour le déplacement de cet anneau ainsi que le nombre de chambres de réfrigération. Selon cette forme de réalisation il est nécessaire en plus de retirer complètement le noyau de formage du manchon préformé afin de pouvoir amener radialement l'anneau de pression en une seule pièce entre le noyau de formage et le manchon préformé. Le retrait complet du noyau de formage peut par ailleurs être évité si l'on réalise l'anneau de pression en plusieurs pièces séparables. Dans ce cas, la course du noyau peut être limitée à un minimum ce qui a un effet favorable sur la durée du cycle de production.

Le procédé et le dispositif selon l'invention sont par ailleurs explicités plus en détail par la description d'une série de modes de réalisation possible pour laquelle il est fait référence aux figures des dessins annexés dans lesquelles.

les fig. 1-5          montrent de façon schématique un exemple de
                      réalisation d'un dispositif selon l'invention
                      dans des étapes de fonctionnement successives
                      durant le formage d'une pièce de raccord

la fig. 6             montre un autre exemple de réalisation du
                      dispositif selon l'invention

la fig. 7             montre en coupe longitudinale une pièce de
                      raccord formée selon le procédé de l'invention

la fig. 8          montre, à titre comparatif, en coupe longitudinale une pièce de raccord formée selon la
technique antérieure connue

la fig. 9          montre une pièce de raccord formée selon le
procédé de l'invention comportant un anneau
d'étanchéité introduit après son formage

la fig. 10         montre un troisième mode de réalisation
possible du dispositif selon l'invention en
coupe longitudinale

les fig. 11-13     montrent le dipositif selon la fig. 10 dans
des positions successives de fonctionnement

les fig. 14a et 14b montrent un quatrième mode de réalisation
possible du dispositif selon l'invention dans
deux phases différentes de travail

les fig. 15a et 15b montrent un cinquième mode de réalisation
possible du dispositif selon l'invention dans
deux phases différentes de travail.

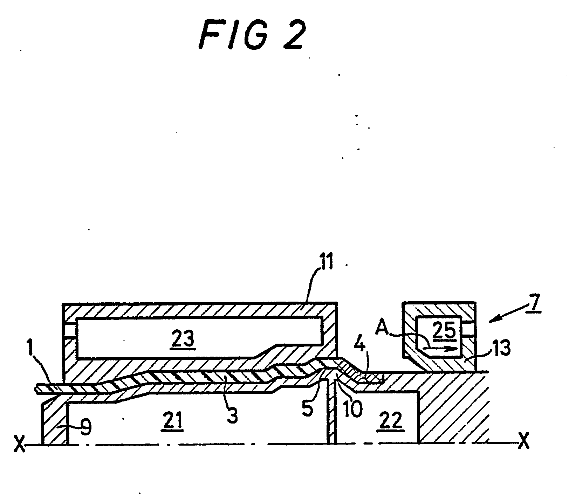

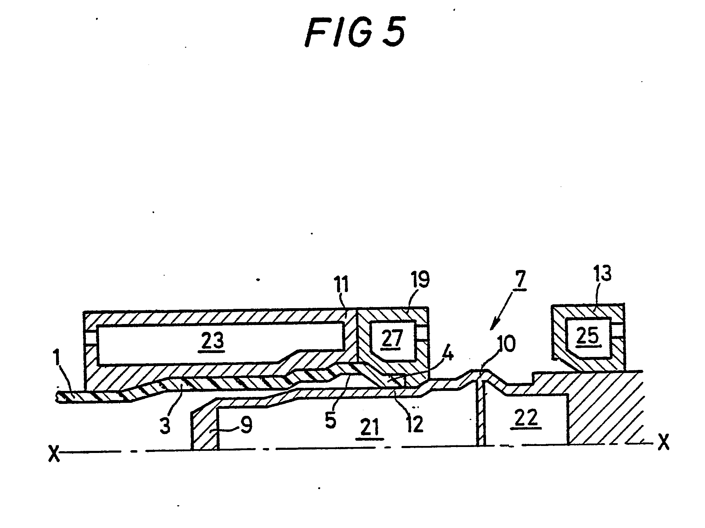

Selon l'exemple de réalisation illustré par les figures 1 à 5, on forme sur une extrémité d'un tuyau 1 extrudé en matière thermoplastique et d'axe XX, une pièce de raccord pourvue d'un manchon 3 de diamètre variant par paliers et comportant une rainure annulaire 5 formant une contredépouille dirigée radialement vers l'extérieure qui peut être exploitée pour le placement ultérieur d'un anneau d'étanchéité en faisant recours à une matrice 7 comprenant principalement un noyau de formage 9 dont le diamètre varie par paliers et qui est pourvu d'une nervure annulaire 10, une douille de formage 11 et un anneau de fermeture 13 qui sont déplaçables axialement l'un par rapport à l'autre entre une position de repos et une position de travail et qui en position de travail ainsi qu'il est montré à la fig. 1 délimitent un espace fermé de préformage 15 dont la forme correspond avec celle du manchon 3 à former. Pour préformer le manchon 3, la partie terminale du tuyau 1 à conformer en un manchon est chauffée à une température telle que la matière thermoplastique est au moins élastiquement déformable et après ce chauffage l'extrémité est introduite dans l'espace de préformage 15 de façon à remplir complètement cet espace et à entourer complètement le noyau de formage 9 de telle sorte que l'extrémité chauffée du tuyau est préformée en un manchon 3 muni d'une rainure 5 et d'une partie terminale retrécie 4.

Dans une étape suivante, le manchon 3 ainsi formé est refroidi de façon telle cependant que la partie terminale 4 soit maintenue à une température telle que celle-ci demeure encore élastiquement déformable.

Ainsi qu'il est montré à la fig.2, l'anneau de fermeture 13 est alors retiré axialement par rapport au noyau de formage 9 selon la direction de la flèche A et de façon telle que la partie terminale 4 repose librement sur le contour externe du noyau de formage.

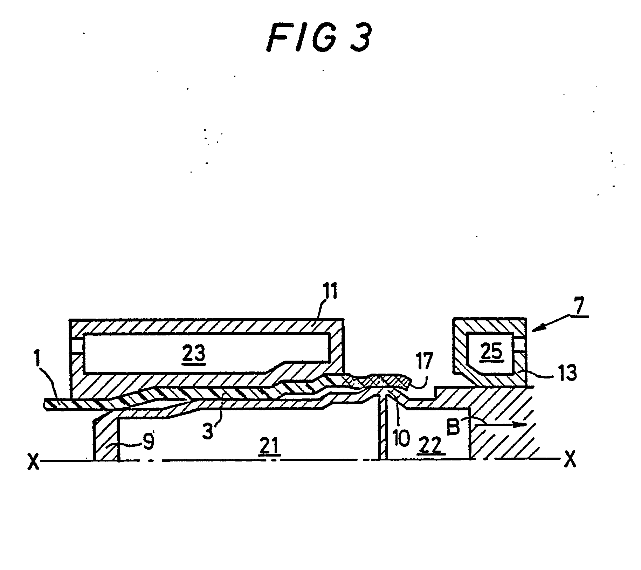

Dans la phase suivante, montrée à la fig.3, le noyau de formage 9 est déplacé selon la direction de la flèche B d'une distance telle que la nervure 10 est retirée par la partie resserrée 4 du manchon 3 qui se déforme élastiquement et radialement vers l'extérieur.

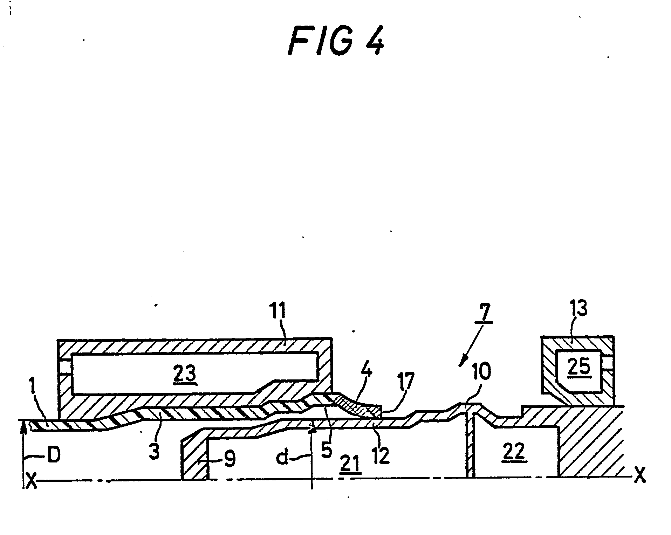

Du fait de l'élasticité de la matière thermoplastique, la partie terminale 4 déformée a tendance à reprendre la forme qui lui avait été conférée dans l'étape précédente de préformage de sorte que l'extrémité libre 17 du manchon 3 peut venir en contact avec la partie cylindrique 12 du noyau de formage située derrière la nervure 10, partie cylindrique dont le diamètre externe d est à peu près identique au diamètre externe D du tuyau 1. Cette situation est illustrée par la fig.4.

Ensuite, selon l'invention, la partie terminale 4 resserrée et déformée élastiquement est postformée mécaniquement en direction axiale et radiale au moyen d'un élément de postformage 19 et ainsi ramenée dans la forme conférée lors du préformage. Conjointement, le postformage de la partie terminale 4 est limité en direction radiale par le noyau de formage 9 et en direction axiale par la douille de moulage 11 qui forme butée pour l'élément de postformage 19.

Ensuite la partie terminale 4 postformée est refroidie dans cet état et finalement l'élément de postformage 19 est à nouveau écarté et le noyau de formage 9, la douille de formage 11 et le tuyau 1 sont déplacés l'un part rapport à l'autre de façon à libérer le tuyau 1 équipé du manchon 3 dans sa forme définitive.

Pour le chauffage et le refroidissement des différentes parties du manchon 3 en cours de sa production, le noyau de formage 9, la douille de formage 11, l'anneau de fermeture 13 et l'élément de postformage 19 sont équipés de chambres 21, 22, 23, 25 et 27 pour la circulation d'un milieu chauffant et/ou réfrigérant.

L'exemple de réalisation du dispositif selon l'invention qui vient d'être décrit est particulièrement conçu pour le formage de pièces de raccord et de manchons d'épaisseur de paroi relativement grande et/ou dans lesquels la diminution d'épaisseur de paroi due à l'augmentation du diamètre est compensée ou même surcompensée et dans lesquels l'épaisseur de paroi est déterminée par la hauteur de l'espace de formage 15 mesurée en direction radiale.

La matière thermoplastique à travailler dans l'espace de formage 15 peut être introduite par coulage, par extrusion, par injection etc ou comme décrit dans l'exemple de réalisation exposé provenir d'une partie chaude de tuyau obtenu par extrusion.

Pour le formage de manchons et de pièces de raccord d'épaisseur de paroi relativement faible et/ou dans lesquels une compensation de l'amincissement de paroi engendré par l'accroissement du diamètre n'est pas nécessaire et pour lesquels le matériau de départ est nécessairement un produit tubulaire, on peut faire appel à un mode de réalisation plus simple du dispositif selon l'invention qui est donné schématiquement à la fig.6. Ce dispositif est dépourvu de douille de formage et d'anneau de fermeture et le préformage du manchon est réalisé pneumatiquement.

A cet effet, le dispositif 67 comporte un noyau de formage 69 pourvu d'une nervure annulaire 60 et de canaux 61 qui débouchent sur la paroi externe du noyau de formage 69 et qui via un collecteur commun 63 sont raccordés à une source de vide non représentée.

Dans ce dispositif, après avoir introduit le noyau de formage 69 dans la partie chauffée du tuyau 1 dont le matériau thermoplastiquement déformable suit le profil externe du noyau 69, on fait agir le vide via les canaux 61-63 sur la surface externe du noyau de formage de façon à profiler exactement le manchon 3 ainsi préformé au contour externe du noyau de formage 69.

Le refroidissement et le maintien à température du manchon préformé ainsi que les étapes ultérieures de formage sont similaires à ce qui a déjà été décrit en rapport avec le dispositif illutré aux fig.1-5. Ce dispositif est également pourvu selon l'invention d'un élément de postformage 19 pour le postformage de la partie terminale 4 du manchon préformé qui est déformée élastiquement lors du retrait partiel du noyau de formage.

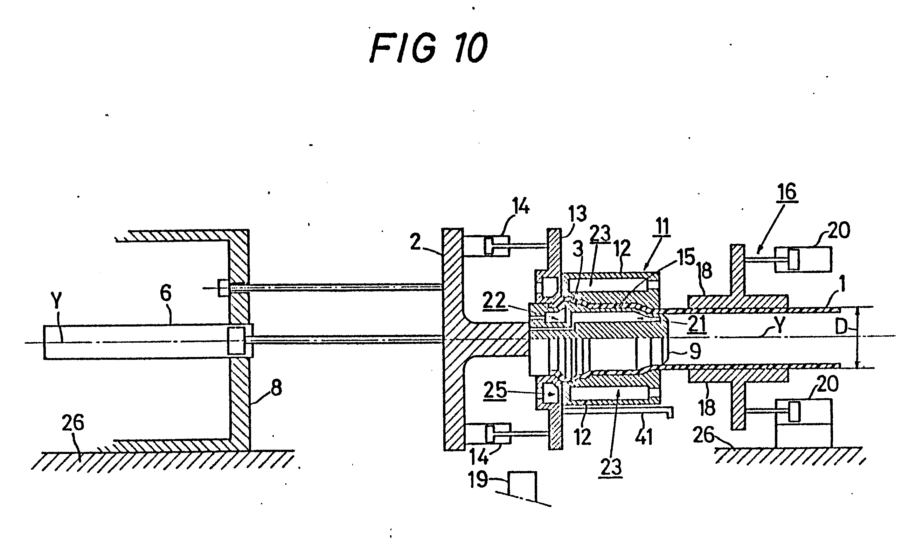

Selon un autre mode de réalisation du dispositif selon l'invention qui est illustré aux figures 10-13 celui-ci comporte principalement un noyau de formage 9 en une seule pièce présentant une nervure périphérique annulaire 10 de diamètre externe R et pourvu de deux chambres de circulation 21, 22 qui fonctionnent comme chambres de chauffage ou de refroidissement.

Le contour externe du noyau de formage 9 vient s'adapter dans le contour interne du manchon 3 à former. Le noyau de formage est fixé sur une plaque support 2 qui est déplaçable axialement avec le noyau de formage au noyau d'un cylindre hydraulique 6 qui est placé dans un boîtier 8. Le dispositif comporte en outre une douille de formage 11 constituée de deux coquilles de formage 12 séparables radialement par des moyens mécaniques, pneumatiques ou électriques non représentes. Chaque coquille 12 comporte une chambre de circulation 23 qui sert à la fois de chambre de chauffage et de chambre de réfrigération. Le dispositif comporte encore un anneau de fermeture 13 de diamètre interne T pourvu d'une chambre de circulation 25 qui fonctionne uniquement en tant que chambre de chauffage. L'anneau de fermeture 13 est déplaçable axialement par rapport au noyau de formage 9 par l'intermédiaire d'une unité hydraulique 14. Le dispositif comporte encore un collier de serrage 16 qui consiste en deux brides de serrage 18 séparables radialement, ce collier pouvant être déplacé axialement au moyen d'une unité hydraulique 20. Le dispositif comporte enfin un élément de postformage 19 se présentant sous la forme d'un anneau de pressage de diamètre S et pourvu d'une chambre de refroidissement 27. Cet élément peut être déplacé axialement et radialement de façon connue en soi. Sur l'anneau de pressage 19 et la plaque 2 sont fixés des éléments d'entraînement respectivement 39,41. L'anneau de pressage 19 est de plus pourvu d'un organe d'amené 37 qui est couplé à un cylindre hydraulique non représenté. Le noyau de formage 9, le boîtier 8, la douille de formage 11, l'anneau de fermeture 13, le collier de serrage 16 et l'anneau de pression 19 qui sert d'élément de postformage sont disposés sur un châssis 26 qui est seulement schématisé. Au moyen des unités hydrauliques 6, 14, 20 le noyau de formage 9, l'anneau de fermeture 13 et le collier de serrage 16 peuvent être déplacés coaxialement en direction axiale l'un par rapport à l'autre, selon la direction de l'axe commun YY de ces éléments.

Le dispositif décrit fonctionne de la façon suivante.

Pour le formage d'un manchon 3 sur l'extrémité du tuyau 1 en matière thermoplastique de diamètre externe D, ledit manchon présentant une rainure annulaire 5 pour le placement ultérieur d'un anneau d'étanchéité et une extrémité retrécie 4 dont le diamètre interne est pratiquement égal au diamètre externe D du tuyau, le noyau de formage 9, la douille de formage 11 et l'anneau de fermeture 13 sont amenés en position de travail illustrée à la fig.10, position dans laquelle ces éléments délimitent un espace de préformage 15 qui correspond au profil à conférer au manchon 3. Ensuite le tuyau 1, dont l'extrémité à former est chauffée à une température telle que la matière thermoplastique le constituant est moulable, est fixé dans le collier de serrage 16 et est poussé par son extrémité chauffée dans l'espace de préformage 15 jusqu'à ce que cet espace soit complètement rempli. De ce fait l'extrémité chauffée subit un accroissement de diamètre ainsi qu'un refoulement connu en soi par le brevet Etats-Unis 4 006 757 déposé au nom de POLVA-NEDERLAND B.V. Dans cette phase de travail un fluide de chauffage tel par exemple de l'huile chaude circule dans les chambres 21, 22 du noyau de formage 9, 23 des coquilles de formage 12 et 25 de l'anneau de fermeture 13. Lorsque l'espace de préformage 15 est complètement rempli et que l'extrémité du tuyau 1 a la forme voulue, le fluide de chauffage dans la chambre 21 du noyau de formage et dans la chambre 23 des coquilles 12 est remplacé par un fluide réfrigérant de sorte que la partie du manchon 3 entourée par ces chambres est refroidie de façon à conserver la forme qui lui a été conférée. Par contre, la partie terminale 4 dirigée vers l'intérieur du manchon 3, depuis l'extrémité libre jusqu'à la rainure 5 qui est enfermée par l'anneau de fermeture 13 et la partie postérieure du noyau de formage 9 est maintenue, par une circulation d'un fluide chaud dans les chambres 22 et 25, à une température telle que celle-ci demeure élastiquement déformable. Cette situation est montrée à la fig. 10 dans laquelle l'anneau de pression 19 se trouve en position de repos.

Dans un stade suivant du formage, l'anneau de fermeture 13 est déplacé vers l'arrière dans la direction de la plaque support 2 de sorte que la partie terminale 4 du manchon 3 préformé est libérée.

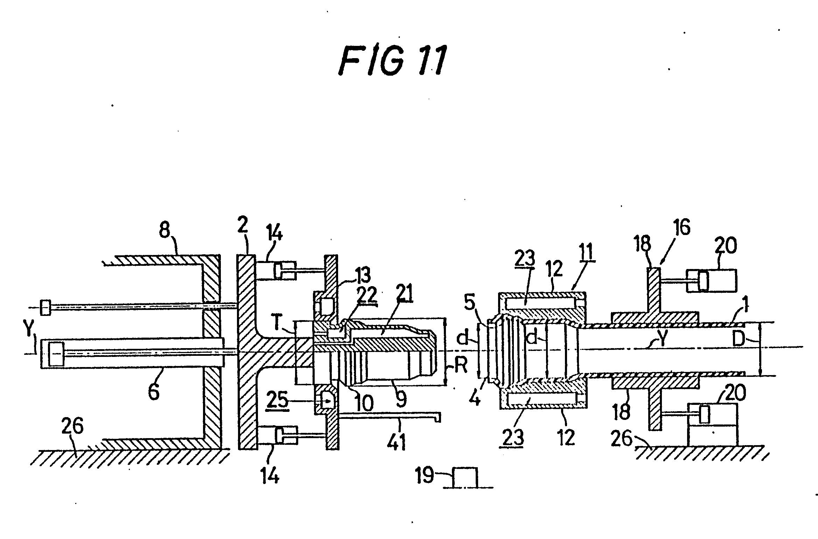

Ensuite le noyau de formage 9 est également déplacé en direction axiale vers le boîtier 8 et est donc retiré du manchon 3, avec pour conséquence que la partie terminale 4 du manchon 3 est déformée élastiquement par la nervure 10 en saillie sur le noyau de formage 9. La distance de retrait du noyau de formage 9 est telle qu'il existe un espace libre entre l'extrémité de ce noyau et l'extrémité du manchon 3. Cette situation est illustrée par la fig.11 dans laquelle l'anneau de pression 19 se trouve toujours en position de repos.

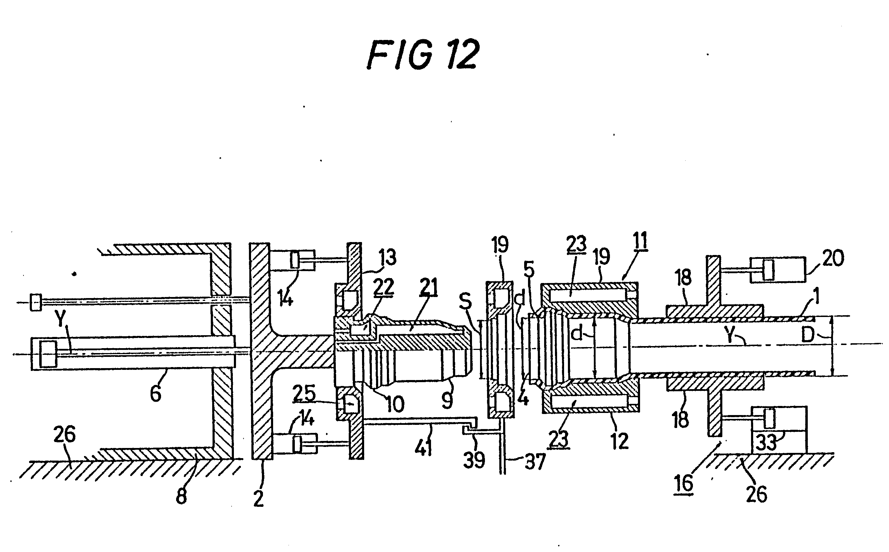

Ainsi qu'il est montré à la fig. 12, l'anneau de pression ou de postformage 19 est ensuite amené par un déplacement radial dans l'espace libre entre le noyau de formage 9 et l'extrémité du manchon 3 de façon à être coaxial au noyau de formage 9.

Le noyau de formage 9 est alors déplacé de nouveau axialement dans la direction de la douille de formage 11 et pénétre partiellement par son extrémité menante dans le manchon 3.

L'anneau de pression 19 est entraîné par ce déplacement axial du noyau de formage 9 et est pressé contre le butée de la douille de formage 11. De ce fait le noyau de formage 9, la douille de formage 11 et l'anneau de pression délimitent un espace de postformage qui confère à l'extrémité 4 du manchon 3 une forme identique à celle conférée lors du préformage comme montré à la fig.10.

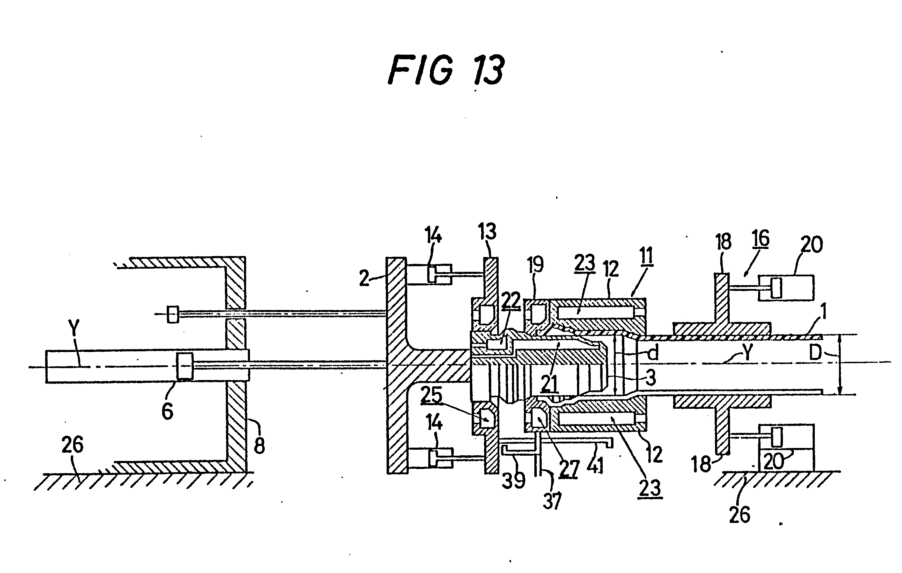

La fig.13 montre le noyau de formage 9, la douille de formage 11 et l'anneau de pression 19 en position de travail dans laquelle l'extrémité 4 du manchon 3 est enfermée dans l'espace de postmoulage. Durant le déplacement axial et dans la position de travail de l'anneau de pression représentée, la partie terminale 4 encore élastiquement déformable du manchon 3 est postformée en direction axiale et en direction radiale.

La partie terminale 4 du manchon 3 est ensuite refroidie pour la rendre indéformable par circulation d'un fluide réfrigérant dans la chambre de circulation 22 du noyau de formage et dans la chambre de circulation 27 de l'anneau de pression 19.

Finalement, le. noyau de formage 9 est retiré du manchon 3 et l'anneau de pression 19 est également entraîné dans ce mouvement axial par les organes d'entraînement 39-41. Ensuite par un déplacement radial vers l'extérieur, l'anneau de pression 19 est remis en position de repos. Après ouverture de la douille de formage 11 et du collier de serrage 16, le tuyau peut être retiré du dispositif, après quoi le noyau de formage 9, la douille de formage 11 et l'anneau de fermeture 13 sont ramenés en position de travail comme représenté à la fig.10 et conditionnés de nouveau à température souhaitée en vue du traitement du tuyau suivant.

Le mode de réalisation selon les fig.10 à 13 est conçu particulièrement pour le formage de manchons équipés d'une rainure 5 relativement profonde et/ou de relativement faible épaisseur de paroi dans lesquels le diamètre interne T de l'anneau de fermeture 13 est plus petit que le diamètre externe de la rainure 5.

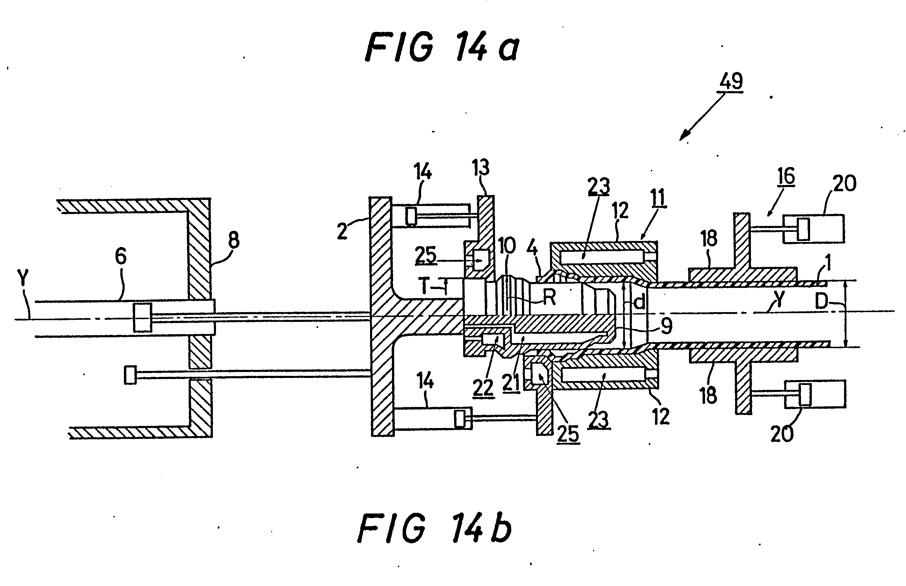

Les fig.14a et 14b montrent un autre mode de réalisation du dispositif selon l'invention en position de repos et en position de travail. Dans cette forme de réalisation l'anneau de fermeture 13 agit également en tant qu'élément de postformage. Le formage du manchon 3 sur l'extrémité du tuyau 1 est réalisé de la façon déjà explicitée en rapport avec la fig.10. La fig.14a correspond avec la fig.11 et diffère de celle-ci en ce que le noyau de formage 9 n'est pas retiré complètement du manchon 3 car il suffit que le déplacement du mandrin soit telle que la nervure 10 soit retirée au-delà de la partie rétrécie 4 du manchon 3. La fig. 14b illustre la situation correspondant à la fig.13, où le noyau de formage 9, la douille de formage 11 et l'anneau de fermeture 13 se trouvent en position de travail et délimitent un espace de postformage.

Ainsi, qu'il apparaît aux fig.14a et 14b, le diamètre interne T de l'anneau de fermeture est plus grand que le diamètre maximum R du noyau de formage 9 au niveau de la nervure 10. Cette forme de réalisation du dispositif selon l'invention est donc conçue en particulier pour le formage d'un manchon 3 ayant une rainure interne relativement peu profonde et/ou une grosse épaisseur de paroi et dans lequel le diamètre externe sur l'extrémité libre terminale est plus grand que le diamètre interne maximum à hauteur de la rainure. Les étapes successives ainsi que les phases de chauffage et de refroidissement des différents éléments constitutifs sont analogues avec ce qui a été décrit en rapport avec le dispositif selon les fig.10-13. Du fait que, dans ce mode de réalisation, le noyau de formage 9 n'est pas retiré complètement du manchon avant le postformage, le cycle de travail est raccourci.

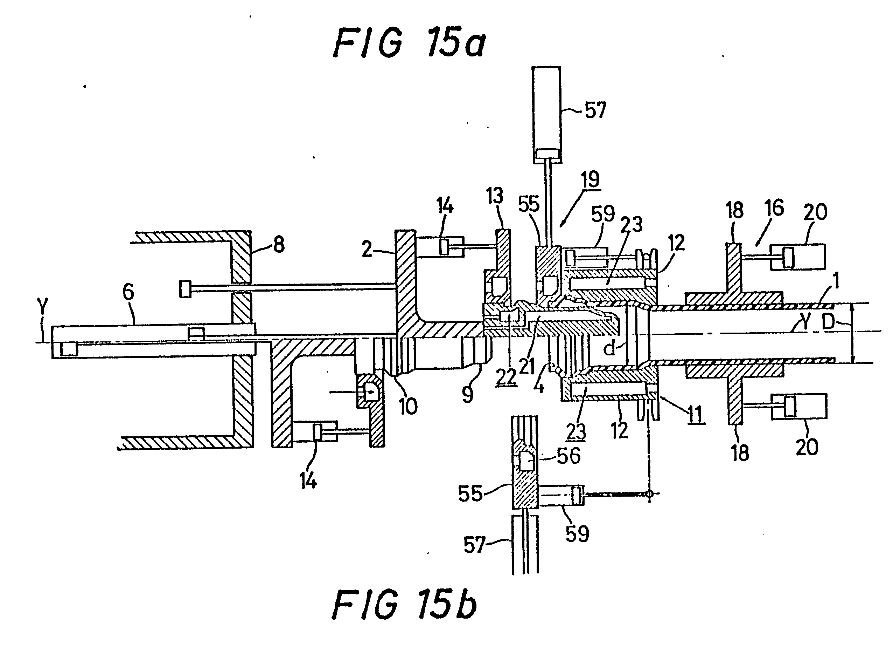

Les fig. 15a et 15b montrent encore une autre forme de réalisation du dispositif selon l'invention dans lequel l'anneau de pression 19 en deux parties est constitués de deux demi-anneaux 55 pourvus chacun d'une chambre de circulation 56. La fig.15a montre le dispositif en position de travail c'est-à-dire dans une position analogue à celle des fig. 13 et 14a durant la phase de postformage dans laquelle le noyau de formage 9, la douille de formage 11 et l'anneau de pression 19 délimitent un espace de postformage. Chaque demi-anneau 55 est déplaçable en direction radiale au moyen d'une unité hydraulique 57 et dans un direction axiale, indépendamment du noyau de formage 9 au moyen d'une unité hydraulique 59. L'ordre de succession des phases de travail et des phases de chauffage et de refroidissement est analogue à ce qui a déjà été décrit précédemment. Dans ce mode de réalisation, le noyau de formage n'est retiré du manchon 3, avant postformage, que d'une distance telle que la nervure 10 est extraite de la rainure 5.

Selon un dernier mode de réalisation possible du dispositif selon l'invention dérivé du précédent, l'anneau de fermeture accomplit la fonction de l'anneau de pression et est donc constitué en deux parties.

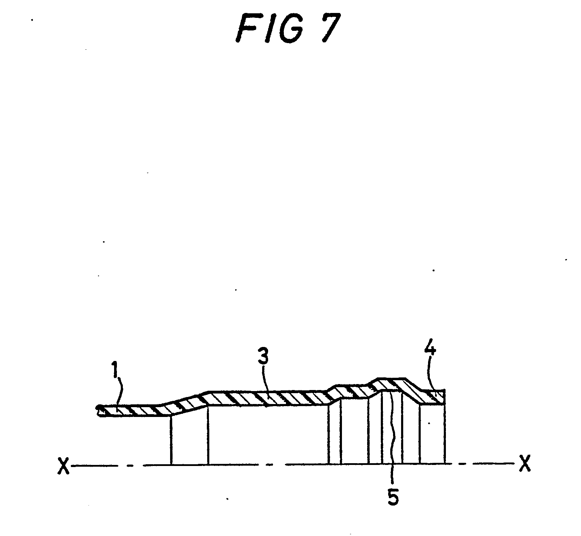

La fig. 7 montre, un manchon 3 avec la nervure annulaire 5 formé par le procédé de l'invention et au noyau des dispositifs prédécrit dans lequel la précision de forme et de dimensions sur la paroi interne de la partie resserrée 4 est pareille à celle de la partie antérieure refroidie du manchon.

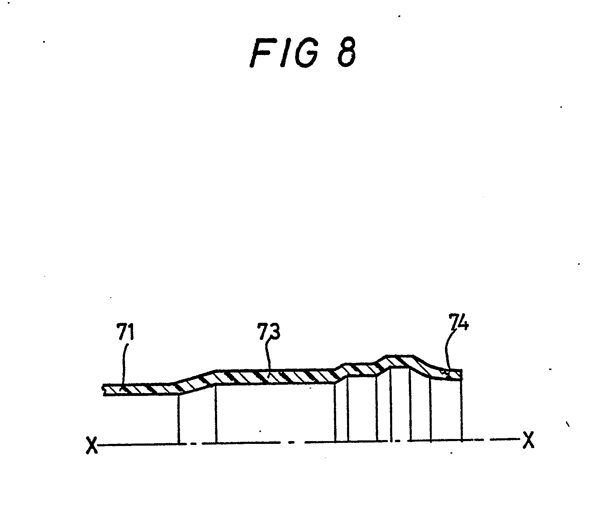

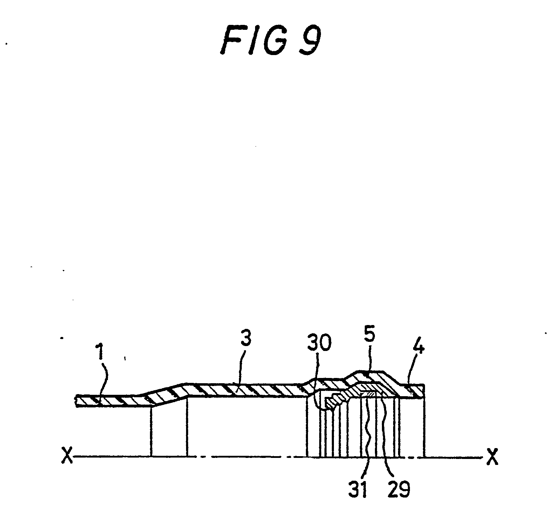

La fig.8 montre schématiquement et par comparaison un manchon 73 sur l'extrémité d'un tuyau 71 dont la partie terminale 74 resserrée n'est pas postformée et ne correspond pas à la forme souhaitée. La fig.9 montre un manchon 3 formé sur l'extrémité d'un tuyau 1 par le procédé de l'invention avec un anneau d'étanchéité 29 disposé dans la rainure 5 et qui est pourvu d'une lèvre d'étanchéité 30. Cet anneau est maintenu en place par un anneau de blocage 31.

Grâce à sa haute précision de forme et de dimensions, la pièce de raccord obtenue selon le procédé de l'invention permet le raccordement aisé et sur de tuyaux tout en garantissant une étanchéité fiable.

Les formes de réalisation décrites de l'invention concernent le formage d'une pièce de raccordement comprenant un seul manchon. L'invention peut évidemment être également exploiter pour la réalisation de pièces de raccord avec un manchon aux deux extrémités de la pièce. Pour ce faire il suffit de doubler les éléments constitutifs des dispositifs décrits.

- 17 -

REVENDICATIONS

1 - Procédé pour le formage de pièces de raccord en matière thermoplastique comportant au moins une contredépouille annulaire dans lequel la matière thermoplastique est formée à l'aide d'un noyau de formage pourvu d'une nervure annulaire et dont la surface externe correspond à la surface interne de la pièce de raccord à former, le formage étant réalisé sous une pression et une température telle que le noyau de formage est entouré étroitement par la matière thermoplastique de façon à former une pièce de raccord avec une contredépouille annulaire, dans lequel la pièce de raccord ainsi préformée est refroidie en partie, la partie terminale resserrée de la pièce de raccord depuis l'extrémité libre jusqu'à la plus grande profondeur de la contredépouille étant maintenue à une température telle que cette partie demeure élastiquement déformable, dans lequel le noyau de formage est ensuite retiré avec sa nervure annulaire de la partie terminale resserrée moyennant une déformation élastique de cette partie terminale, dans lequel la partie terminale élastiquement déformée est ensuite refroidie à une température à laquelle la matière thermoplastique n'est plus déformable et dans lequel la pièce de raccord ainsi formée est retirée complètement du noyau de formage caractérisé en ce que la partie terminale resserrée de la pièce de raccord préformée est postformée dans la forme finale désirée après sa déformation élastique et avant son refroidissement complet.

2 - Procédé selon la revendication 1 caractérisé en ce que le refroidissement de la partie terminale resserrée de la pièce de raccord est réalisé durant l'opération de postformage.

3 - Dispositif pour la réalisation du procédé selon les revendications 1 ou 2 comprenant un noyau de formage (9) pourvu d'une nervure annulaire (10) dans lequel le noyau de formage (9) est déplaçable axialement entre une position de repos et une position de travail caractérisé en ce qu'il comporte un élément de postformage (19) déplaçable par rapport au noyau de formage (9) entre une position de repos et une position de travail et dont la forme est semblable à une partie de la forme du noyau de formage (9).

4 - Dispositif selon la revendication 3 caractérisé en ce que l'élément de postformage (19) est réalisé en une seule pièce.

5 - Dispositif selon la revendication 3 caractérisé en ce que l'élément de postformage (19) est réalisé en plusieurs pièces (55) séparables.

6 - Dispositif selon l'une quelconque des revendication 3 à 5 caractérisé en ce que l'élément de postformage (19) est équipé d'une chambre interne (27) de réfrigération.

7 - Dispositif selon l'une quelconque des revendications 3 à 6 caractérisé en ce qu'il comprend en outre une douille de formage (11), et un anneau de fermeture (13) et en ce que l'élément de postformage (19) est déplaçable par rapport au noyau de formage (9) et à la douille de formage (11) entre une position de repos et une position de travail dans laquelle il délimite un espace de postformage avec le noyau de formage (9) et la douille de formage (11).

8 - Dispositif selon l'une quelconque des revendications 3 à 7 caractérisé en ce que l'élément de postformage (19) est exécuté sous forme d'un anneau de pression.

9 - Dispositif selon l'une quelconque des revendications 3 à 8 caractérisé en ce que l'élément de postformage (19) est déplaçable radialement par rapport au noyau de formage (9).

# FIG 2

# FIG 3

## FIG 4

# FIG 5

Y/15

## FIG 7

# FIG 8

# FIG 9

*FIG 10*

FIG 11

# FIG 12

# FIG 13

# FIG 14 a

# FIG 14 b

# FIG 15a

# FIG 15b

Office européen
des brevets

**RAPPORT DE RECHERCHE EUROPEENNE**

0012480

Numéro de la demande

EP 79 20 073.

## DOCUMENTS CONSIDERES COMME PERTINENTS

| Catégorie | Citation du document avec indication, en cas de besoin, des parties pertinentes | Revendication concernée |
|---|---|---|
| | <u>US - A - 3 749 543</u> (STANSBURY)<br>* Figures; colonne 5, lignes 6-18 * | 3-5,8 |
| | -- | |
| | <u>US - A - 3 729 282</u> (H. HERTER)<br>* Figures 1-3; colonne 2, lignes 59-67 * | 3,4 |
| | -- | |
| | <u>DE - A - 2 055 248</u> (MANNESMANN)<br>* Figures; page 2, ligne 33 - page 4, ligne 15 * | 5 |
| | -- | |
| | <u>FR - A - 2 144 424</u> (FORSHEDA)<br>* Figures * | 5 |
| | -- | |
| | <u>FR - A - 2 302 180</u> (POLVA)<br>* Figures; page 9, lignes 17-20 * | 6,7 |
| D | & US - A - 4 006 757 | |
| | -- | |
| A | <u>DE - A - 2 542 045</u> (POLOPLAST)<br>* Figures, revendications * | 1 |
| | -- | |
| A | <u>DE - A - 2 143 240</u> (WAVIN) | |
| | ---- | |

**CLASSEMENT DE LA DEMANDE (Int. Cl. ³)**

B 29 C 17/02

**DOMAINES TECHNIQUES RECHERCHES (Int. Cl. ³)**

B 29 C

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche<br>La Haye | Date d'achèvement de la recherche<br>24-03-1980 | Examinateur<br>CORDENIER |
|---|---|---|

OEB Form 1503.1  06.78